# EUROPÄISCHE PATENTSCHRIFT

(11) **EP 3 226 464 B1**
(45) Veröffentlichungstag und Bekanntmachung des Hinweises auf die Patenterteilung: **28.08.2019**
(21) Anmeldenummer: 17156199.6
(22) Anmeldetag: 15.02.2017
(51) Int. Cl.: H04L 9/32, H04L 9/08

(54) **DATENSTRUKTUR ZUR VERWENDUNG ALS POSITIVLISTE IN EINEM GERÄT, VERFAHREN ZUR AKTUALISIERUNG EINER POSITIVLISTE UND GERÄT**
DATA STRUCTURE FOR USE AS POSITIVE LIST IN AN APPARATUS, METHOD FOR UPDATING A POSITIVE LIST AND APPARATUS
STRUCTURE DE DONNÉES DESTINÉE À ÊTRE UTILISÉE COMME LISTE POSITIVE DANS UN APPAREIL, PROCÉDÉ DE MISE À JOUR D'UNE LISTE POSITIVE ET APPAREIL

(30) Priorität: 30.03.2016 DE 102016205203
(43) Veröffentlichungstag der Anmeldung: 04.10.2017
(73) Patentinhaber: Siemens Aktiengesellschaft, 80333 München (DE)
(72) Erfinder: Brockhaus, Hendrik, 85579 Unterbiberg (DE); Falk, Rainer, 85586 Poing (DE); Seltzsam, Stefan, 85653 Aying (DE)

(56) Entgegenhaltungen:
- DE-A1-102014 203 813
- US-A1- 2012 089 839
- Rainer Falk ET AL: "Using Managed Certificate Whitelisting as a Basis for Internet of Things Security in Industrial Automation Applications", International Journal on Advances in Security, vol. 8, no. 1 & 2, 30. Juni 2015 (2015-06-30), Seiten 89-98, XP55398447, Gefunden im Internet: URL:https://www.iariajournals.org/security /sec_v8_n12_2015_paged.pdf#page=97 [gefunden am 2017-08-14]

## Beschreibung

Die Erfindung betrifft eine Datenstruktur zur Verwendung als Positivliste in einem Gerät umfassend einen Eintrag für jeden erlaubten Kommunikationspartner des Geräts, ein Verfahren zur Aktualisierung der Positivliste, ein Gerät umfassend eine solche Positivliste sowie ein entsprechendes Computerprogrammprodukt zur Ausführung des Verfahrens.

In industriellen Automatisierungsanlagen wird zunehmend mittels offener Protokolle wie den Internetprotokollen IP, TCP, UDP, http oder CoAP, einem Protokoll für Ressourcenbeschränkte Geräte, kommuniziert. Häufig werden dabei Sicherheitsprotokolle verwendet, die auf einer Public Key Infrastructure für asymmetrische Verschlüsselungsverfahren mit privatem und öffentlichem kryptographischem Schlüssel basieren. Dabei wird jedem Kommunikationspartner ein privater Schlüssel zugewiesen, der zur Erstellung einer digitalen Signatur oder zur Entschlüsselung von Nachrichten verwendet wird. Der entsprechende öffentliche Schlüssel wird mittels Zertifikaten an andere Kommunikationspartner verteilt und zur Verschlüsselung von Nachrichten beziehungsweise zur Überprüfung der digitalen Signatur verwendet.

Nach dem Empfang eines Zertifikats, beispielsweise mit einer Verbindungsanfrage von einem Kommunikationspartner, führt das Gerät eine Zertifikatsvalidierung durch. Bei einer Zertifikatsvalidierung wird geprüft, ob die Einträge des Zertifikats gültig sind, die Signatur des Zertifikats von einer vertrauenswürdigen Zertifizierungsstelle ausgestellt wurde und es nicht zurückgerufen wurde. Werden alle Kriterien erfüllt ist das Zertifikat als gültig validiert. Dieses Verfahren ermöglicht eine vertrauenswürdige Kommunikation mit vielen Kommunikationspartnern, da ein Kommunikationspartner anhand seines Zertifikats authentisiert werden kann und Nachrichten verschlüsselt, unter Verwendung des im Zertifikat eingebetteten öffentlichen Schlüssels, übermittelt werden können.

In den industriellen Automatisierungsanlagen soll beispielsweise ein Feldgerät nicht mit jedem anderen Feldgerät kommunizieren, das ein gültiges Zertifikat einer vertrauenswürdigen Zertifizierungsstelle vorlegt. Erlaubte Kommunikationspartner, mit denen ein solches Gerät kommunizieren darf, werden häufig durch eine Positivliste, wie beispielsweise eine Certificate White List oder auch eine Certificate Authorization Validation List beschränkt.

In Falk et al. "Using Managed Certificate Whitelisting as a Basis for Internet of Things Security in lndustrial Automation Applications", International Journal on Advances in Security, vol. 8, no. 1 & 2, 30. Juni2015 (2015-06-30), Seiten 89-98, XP55398447) wird die Verwaltung von Certificate White Lists beschrieben. Die Grundidee einer Certificate White List ist das explizite Auflisten von autorisierten, d.h vertrauenswürdigen, Zertifikaten für ein Gerät. Somit kann eine solche Liste für die Zugriffskontrolle benutzt werden. Die Bildung einer Liste kann automatisch anhand von Informationen über die Geräte selbst und ihrer Kommunikationsbeziehungen erfolgen. Solch eine Liste mit zugelassenen Zertifikaten kann für Automatisierungssysteme erstellt werden. Es können gerätespezifische Certificate White Lists oder Listen für bestimmte Zwecke bzw. Geltungsbereiche, z.B. Überwachungskontrollzugang, generiert werden.

In der DE 10 2014 201 234 A1 ist die Erzeugung einer solchen Positivliste beispielsweise abhängig von der Aufgabe, die ein Gerät innerhalb eines Netzes erfüllt, beschrieben. Eine solche Positivliste ist häufig entsprechend einer Zertifikatsperrliste, auch Certificate Revocation List, entsprechend dem Standard RFC3280 oder RFC5280 aufgebaut.

In der DE 10 2014 203813 A1 wird ein Verfahren und eine Vorrichtung zum Verwenden einer Positivliste aus Zertifikaten beschrieben. Dabei wird eine Nachricht erzeugt, die sowohl die Überprüfung des Zertifikats als auch eine Ermittlung, ob das Zertifikat in einer Positivliste gelistet ist, erzwingt. Somit wird vermieden, dass die Autorisierung erfolgreich ist, falls zwar die Überprüfung des Zertifikats positiv ist aber eine Ermittlung anhand der Positivliste unterbleibt.

Aus US2012/089839A1 ist ein Verfahren zum Aktualisieren von Identitätsdaten eines Geräts bekannt.

Typischerweise haben Zertifikate eine begrenzte Gültigkeitsdauer, die typischerweise im Bereich von mehreren Monaten bis wenige Jahre liegt. Im Zuge einer Aktualisierung des Zertifikats eines Geräts, müssen die Positivlisten aller seiner Kommunikationspartner aktualisiert werden. Dazu kann beispielsweise eine aktualisierte Positivliste von der Zertifizierungsstelle, die typischerweise das aktualisierte Zertifikat ausstellt, an das Gerät gesendet werden. Ein Gerät das ein aktualisiertes Zertifikat erhält kann auch bei der Zertifizierungsstelle anfragen, ob dieses Zertifikat gültig ist. Dies bedingt eine hohe Anzahl von Aktualisierungsnachrichten, die einerseits in den Geräten Prozessorkapazität bindet und andererseits zusätzliche Last im Übertragungsnetz verursacht.

Anstatt einer Verwendung einer Positivliste ist es bisher auch bekannt, eine Kennung aus dem Zertifikat gegenüber einer Zugangskontrollliste auf einem Access Management-Server zu prüfen. Ebenfalls ist es bekannt, eine Kennung des Zertifikats mit einer Kennung aus den Projektierungsdaten, die üblicherweise auf einem Projektierungs-Server bereitgestellt werden, zu vergleichen.

Auch diese Verfahren sind mit einer großen Anzahl von Nachrichten zwischen dem Gerät und einem anderen Server verbunden, der sich eventuell innerhalb des Anlagennetzes, oft aber auch außerhalb des geschlossenen Anlagenetzes befindet. Somit wird ein hoher Netzverkehr erzeugt und zusätzliche Prozessorkapazität in den Geräten in Anspruch genommen.

Es ist somit die Aufgabe der vorliegenden Erfindung, eine effiziente Verwaltung von Zertifikaten vertrauenswürdiger Kommunikationspartner zu schaffen, die die hohe Netzwerkbelastung durch Aktualisierungsnachrichten reduziert und möglichst autonom in einem Gerät ausgeführt werden kann.

Die Aufgabe wird durch die in den unabhängigen Ansprüchen beschriebenen Maßnahmen gelöst. In den Unteransprüchen sind vorteilhafte Weiterbildungen der Erfindung dargestellt.

Die erfindungsgemäße Datenstruktur zur Verwendung als Positivliste in einem Gerät umfasst einen Eintrag für jeden erlaubten Kommunikationspartner des Geräts. Jeder Eintrag enthält eine erste Kennung, die den Kommunikationspartner eindeutig kennzeichnet, einen Wert eines vorbestimmten Zertifikatfeldes, das ein Zertifikat als dem Kommunikationspartner eindeutig zugeordnet kennzeichnet und jeweils einen Prüfwert von mindestens einem Zertifikat eines Kommunikationspartners, der das gesamte Zertifikat eindeutig kennzeichnet. Die Datenstruktur umfasst zumindest zeitweise einen Prüfwert eines alten Zertifikats und einen Prüfwert eines neuen Zertifikats.

Durch diese einfache Struktur einer Positivliste, die aus jeweils einem Eintrag, beziehungsweise einem Tupel von Parametern, für jeden erlaubten Kommunikationspartner aufgebaut ist, werden alle erlaubten Kommunikationspartner im Gerät selbst verwaltet. Durch die erste Kennung und den Wert des vorbestimmten Zertifikatfelds können Zertifikate einem bestimmten Kommunikationspartner zugeordnet werden. Somit kann über das Zertifikatfeld eines von einem vermeintlich erlaubten Kommunikationspartner erhaltenen Zertifikats überprüft werden, ob es sich tatsächlich um den erlaubten Kommunikationspartner handelt. Durch die Überprüfung des Prüfwerts wird festgestellt, ob der Inhalt des Zertifikats einem bestimmten Zertifikat entspricht. Der Prüfwert eines aktualisierten Zertifikats beispielsweise entspricht nicht dem Prüfwert eines vorher verwendeten alten Zertifikats und wird somit identifiziert.

Das zumindest zeitweise Auflisten eines Prüfwerts eines neuen und eines Prüfwerts eines alten Zertifikats ermöglicht es, insbesondere bei der Aktualisierung eines Zertifikats, das neue Zertifikat als gültiges Zertifikat in der Positivliste zu kennzeichnen. Durch das parallele Vorhandensein sowohl des alten als auch des neuen Prüfwerts können sowohl das alte als auch das neue Zertifikat parallel als gültige Zertifikate erkannt werden. Dies ermöglicht es zumindest während einer Übergangszeit die Kommunikation zwischen einem Gerät und einem Kommunikationspartner aufrecht zu erhalten und ermöglicht somit eine kontinuierliche Erreichbarkeit des Kommunikationspartners.

In einer vorteilhaften Ausführungsform ist der Prüfwert eines Zertifikats ein mit einer Einwegfunktion über das Zertifikat generierter Wert.

Mittels einer Einwegfunktion, beispielsweise einer Hashfunktion, lässt sich in einfacher Weise eine Kenngröße erzeugen, die den Inhalt eines Zertifikats eindeutig kennzeichnet. Solche Funktionen erfordern einen geringen Rechenaufwand und sind einfach implementierbar.

In einer vorteilhaften Ausführungsform sind die erste Kennung und der Wert des Zertifikatfeldes aller Einträge digital signiert.

Insbesondere werden diese Parameter eines jeden Eintrags von einer vertrauenswürdigen Stelle signiert. Dies hat den Vorteil, dass Änderungen der erlaubten Kommunikationspartner zuverlässig erkannt werden können.

Bei einer vorteilhaften Ausführungsform ist das vorbestimmte Zertifikatfeld der Zertifikatinhaber.

Der Zertifikatinhaber eignet sich insbesondere als vorbestimmtes Zertifikatfeld, da dadurch beispielsweise der Name oder die Seriennummer oder eine sonstige feste Kennung eines Kommunikationspartners hinterlegt ist. Bei einem aktualisierten bzw. neuen Zertifikat für diesen Kommunikationspartner bleiben üblicherweise dessen Gerätekennung und damit auch der Zertifikatinhaber unverändert erhalten.

Bei einer vorteilhaften Ausführungsform ist in einem Eintrag eines erlaubten Kommunikationspartners zusätzlich die Seriennummer eines Gerätezertifikats des Kommunikationspartners enthalten.

Ein solches Gerätezertifikat wird beispielsweise vom Hersteller eines Geräts bereits bei der Fertigung in das Gerät eingebracht oder bei der Inbetriebnahme dem Gerät zugewiesen. Es wird üblicherweise nicht für die Kommunikation mit anderen Geräten beziehungsweise Kommunikationspartnern verwendet, sondern lediglich für eine erste Authentisierung des Gerätes selbst verwendet. Wird jedoch die Seriennummer des Gerätezertifikats des Kommunikationspartners in den Eintrag der Positivliste mit übernommen, kann sich der Kommunikationspartner zusätzlich mit seinem Gerätezertifikat authentifizieren. Die Seriennummer wird in einem Gerätezertifikat ähnlich dem Zertifikatinhaber verwendet und charakterisiert eindeutig das Gerät beziehungsweise in diesem Fall einen Kommunikationspartner.

Das erfindungsgemäße Verfahren zur Aktualisierung einer Positivliste für Zertifikate von erlaubten Kommunikationspartnern eines Geräts, die gemäß den vorgenannten Merkmalen aufgebaut ist, umfasst ein Empfangen eines neuen Zertifikats von einem Kommunikationspartner im Gerät, ein Überprüfen, ob die Positivliste einen Eintrag mit einer Kennung des Kommunikationspartners und einen Wert eines vorbestimmten Zertifikatfeld aus dem neuen Zertifikat aufweist, und ein Aufnehmen eines neuen Prüfwerts, der das neue Zertifikat eindeutig kennzeichnet, in die Positivliste, wenn die Überprüfung der Positivliste ein positives Ergebnis ergeben hat.

Dies hat den Vorteil, dass ein aktualisiertes Zertifikat ohne den Austausch der gesamten Positivliste in die Positivliste aufgenommen wird. Das neue Zertifikat muss dabei jedoch gewisse Mindestanforderungen erfüllen, nämlich von einem bereits in der Positivliste als erlaubten Kommunikationspartner gelisteten Quelle zuordenbar sein und es muss bereits ein Zertifikat für diesen Kommunikationspartner registriert sein. Daneben muss das Zertifikat erfolgreich validiert sein, beispielsweise indem ein angegebenes Root-Zertifikat, mit dem das Zertifikat signiert ist, dem Gerät bekannt ist.

In einer vorteilhaften Ausführungsform wird der Prüfwert aus dem empfangenen Zertifikat von dem Gerät ermittelt.

Somit kann das Gerät eigenständig ein neues Zertifikat in die Positivliste aufnehmen. Dem Gerät steht durch den Prüfwert ein Unterscheidungsmerkmal zur Verfügung, mit dem es ein neues Zertifikat gegenüber einem alten Zertifikat des Kommunikationspartners oder auch gegenüber zeitlich nachfolgend ausgegebene Zertifikate des Kommunikationspartners unterscheiden kann.

In einer vorteilhaften Ausführungsform wird das neue Zertifikat nur dann in die Positivliste aufgenommen, wenn das neue Zertifikat zeitlich nach dem alten Zertifikat ausgestellt wurde.

Durch diese zusätzliche Plausibilitätsprüfung wird verhindert, dass alte Zertifikate des Kommunikationspartners, die beispielsweise durch einen Dritten gesendet wurden, als neue und zulässige Zertifikate für den Kommunikationspartner in die Positivliste eingetragen werden.

In einer vorteilhaften Ausführungsform wird das neue Zertifikat nur dann in die Positivliste aufgenommen, wenn zusätzlich das neue Zertifikat und das alte Zertifikat von der gleichen Zertifizierungsstelle ausgestellt werden.

Auch hierdurch wird die Verwendung möglicherweise manipulierter Zertifikate erkannt und deren Verwendung verhindert.

In einer vorteilhaften Ausführungsform wird das neue Zertifikat nur dann in die Positivliste aufgenommen, wenn das neue Zertifikat zusätzlich den Prüfwert des alten Zertifikats enthält.

Dieser Prüfwert ist im Zertifikat selbst enthalten und damit üblicherweise durch die Signatur des Zertifikats durch eine vertrauenswürdige Stelle geschützt und somit als korrekt und zulässig validiert. Zum anderen kann durch den alten Prüfwert die Verwendung aufeinanderfolgender Zertifikate erzwungen und gewährleistet werden. Der Prüfwert des alten Zertifikats kann dabei auch in einem Attributzertifikat des neuen Zertifikats enthalten sein.

In einer weiteren vorteilhaften Ausführungsform wird das neue Zertifikat nur dann in die Positivliste aufgenommen, wenn sich das Gerät in einem vorbestimmten Zustand befindet.

Beispielsweise kann die Aktualisierung von Zertifikaten nur im Wartungsmodus möglich sein. Insbesondere können die Anforderungen und Plausibilitätsprüfungen zur Aufnahme eines neuen Zertifikats in die Positivliste abhängig vom Zustand, in dem sich das Gerät befindet, unterschiedlich sein. Eine Aktualisierung eines Zertifikats im operativen Zustand des Geräts kann beispielsweise an eine Vielzahl von Bedingungen geknüpft sein oder komplett untersagt sein.

In einer vorteilhaften Ausführungsform wird das neue Zertifikat nur dann in die Positivliste aufgenommen, wenn mindestens eine vorgegebene Teilmenge von Attributen des alten Zertifikats im neuen Zertifikat enthalten ist.

Somit werden bestimmte Mindestanforderungen an das neue Zertifikat durch übereinstimmende Zertifikatfelder festgelegt werden.

Die vorgenannten Kriterien bzw. Plausibilitätsprüfungen können einzeln oder in beliebiger sinnvoller Kombination gültig bzw. zur Aktualisierung der Positivliste als erforderlich festgelegt werden. Eine Aktualisierung ist jeweils nur bei einem positiven Prüfergebnis erlaubt.

In einer vorteilhaften Ausführungsform wird ein aktualisierter Prüfwert dem Gerät über eine mit dem alten Zertifikat authentisierte Verbindung übermittelt und das neue Zertifikat nur dann in die Positivliste aufgenommen, wenn der neue Prüfwert oder ein aus dem neuen Prüfwert abgeleiteter dritter Prüfwert mit dem aktualisierten Prüfwert übereinstimmt.

Der Prüfwert kann beispielsweise eine Zufallszahl sein. Bei einer https-Verbindung kann beispielsweise ein Prüfwert in Form eines Cookies überprüft werden.

In einer vorteilhaften Ausführungsform meldet das Gerät das neue Zertifikat des Kommunikationspartners an eine Überwachungsvorrichtung und das Gerät leitet bei Erhalt eines negativen Prüfergebnisses von der Überwachungsvorrichtung Maßnahmen ein.

So kann beispielsweise eine Zertifikatsänderung eines Kommunikationspartners in einer Überwachungsnachricht, auch als Logmeldung bezeichnet, an eine Überwachungsvorrichtung gemeldet werden. In einer beispielsweise zentralen Prüfung kann die Logmeldung des Feldgeräts gegenüber dem Logmeldungen der vertrauenswürdigen Zertifizierungsstelle geprüft werden. Wenn bei dem Abgleich ein Betrugsversuch erkannt wird, können durch die Rückmeldung im Gerät Maßnahmen eingeleitet werden. So kann beispielsweise der Eintrag für das Zertifikat als Ganzes gesperrt werden, sodass der Kommunikationspartner nicht mehr als erlaubter Kommunikationspartner gilt. Es kann auch lediglich das neue Zertifikat gesperrt werden, sodass noch eine Kommunikation über das alte Zertifikat möglich bleibt.

In einer vorteilhaften Ausführungsform werden das neue und das alte Zertifikat als gültig in die Positivliste eingetragen und das alte Zertifikat wird erst nach Ablauf einer vorbestimmten Zeitdauer oder nach Erhalt eines positiven Überprüfungsergebnisses oder nach Ablauf der Gültigkeitsdauer ungültig.

Somit kann eine kontinuierliche Verfügbarkeit eines Zertifikats sichergestellt werden. Insbesondere wird das alte Zertifikat als Rückfallmöglichkeit während einer Übergangszeit beibehalten.

In einer vorteilhaften Ausführungsform teilt das Gerät allen Kommunikationspartnern, die in der Positivliste genannt sind, durch eine, insbesondere kryptographisch geschützte, Nachricht die Zertifikatänderung des Kommunikationspartners mit.

Dies ermöglicht eine sehr schnelle Aktualisierung der Positivlisten in den Geräten bzw. Kommunikationspartnern einer Anlage.

In einer weiteren vorteilhaften Ausführungsform übermittelt der Kommunikationspartner bei einer Änderung seines Zertifikats zusätzlich sein Gerätezertifikat zur Authentisierung an das Gerät.

Dies erlaubt eine zusätzliche Authentisierung des Kommunikationspartners, beispielsweise durch Vergleich der im übermittelten Gerätezertifikat enthaltenen Seriennummer mit einer in der Positivliste für den Kommunikationspartner genannten Seriennummer. Dies ist insbesondere dann möglich, wenn die Seriennummer des Kommunikationspartners in der Positivliste mit aufgeführt ist. Eine zusätzliche Authentisierung des Kommunikationspartners kann aber auch durch Signatur und Übermittlung des Gerätezertifikats durchgeführt werden.

Das erfindungsgemäße Gerät umfasst eine Aktualisierungseinheit, die derart ausgebildet ist, eine Positivliste mit den genannten Eigenschaften bereitzustellen und gemäß dem beschriebenen Verfahren zu aktualisieren.

In einer vorteilhaften Ausführungsform teilt das Gerät eine Aktualisierung des eigenen Zertifikats allen Kommunikationspartnern, die in der Positivliste enthalten sind, mit.

Damit ist eine schnelle netzweite Aktualisierung der Positivlisten ein den Kommunikationspartnern möglich. Das Gerät kann auch ein als gültig geprüftes neues Zertifikat eines Kommunikationspartners allen anderen in der Positivliste genannten Kommunikationspartnern mitteilen.

Ein erfindungsgemäßes Computerprogrammprodukt, das direkt in einen Speicher des digitalen Computers ladbar ist, umfasst Programmcodeteile, die dazu geeignet sind, die vorgenannten Schritte des Verfahrens durchzuführen.

Ausführungsbeispiele der erfindungsgemäßen Datenstruktur, des erfindungsgemäßen Verfahrens und Gerätes sind in den Zeichnungen beispielhaft dargestellt und werden anhand der nachfolgenden Beschreibung näher erläutert. Es zeigen:
- Figur 1: ein erstes Ausführungsbeispiel der erfindungsgemäßen Datenstruktur in schematischer Darstellung;
- Figur 2: das erste Ausführungsbeispiel der erfindungsgemäßen Datenstruktur mit einer Aktualisierung eines Zertifikats eines ersten Kommunikationspartners;
- Figur 3: das erste Ausführungsbeispiel der erfindungsgemäßen Positivliste nach Abschluss der Aktualisierung des Zertifikats eines ersten Kommunikationspartners;
- Figur 4: ein zweites Ausführungsbeispiel einer erfindungsgemäßen Datenstruktur mit Seriennummer im schematischer Darstellung;
- Figur 5: ein erstes Ausführungsbeispiel des erfindungsgemäßen Verfahrens als Flussdiagramm;
- Figur 6: ein zweites Ausführungsbeispiel des erfindungsgemäßen Verfahrens mit weiterer Plausibilitätsprüfung dargestellt als Ablaufdiagramm; und
- Figur 7: ein Ausführungsbeispiel eines erfindungsgemäßen Geräts in Blockdarstellung.

Einander entsprechende Teile sind in allen Figuren mit den gleichen Bezugszeichen versehen.

In industriellen Automatisierungssystemen sind Geräte über ein meist geschlossenes Kommunikationsnetz miteinander verbunden. Um diese Kommunikation zwischen den Geräten zu schützen, werden asymmetrische Verschlüsselungsverfahren verwendet, um die Integrität von Nachrichten und die Authentizität der Kommunikationspartner überprüfen und gewährleisten zu können. Solche asymmetrischen kryptographischen Verfahren arbeiten mit Schlüsselpaaren bestehend aus einem geheimen Schlüssel und einem öffentlichen Schlüssel. Der geheime Schlüssel wird in einem Gerät sicher abgelegt, der öffentliche Schlüssel des Gerätes wird mittels Zertifikat dem Kommunikationspartner mitgeteilt und über eine Zertifikatvalidierung, das heißt durch Überprüfung einer digitalen Signatur des Zertifikats durch eine vertrauenswürdige ausstellende Zertifizierungsstelle, validiert.

Da beispielsweise in einem Automatisierungsnetz die Kommunikationspartner eines Geräts beschränkt sind und eine Kommunikation zu anderen Kommunikationspartnern nicht erwünscht ist, kann in jedem Gerät eine Positivliste vorhanden sein und geprüft werden, die lediglich die erlaubten Kommunikationspartner enthält.

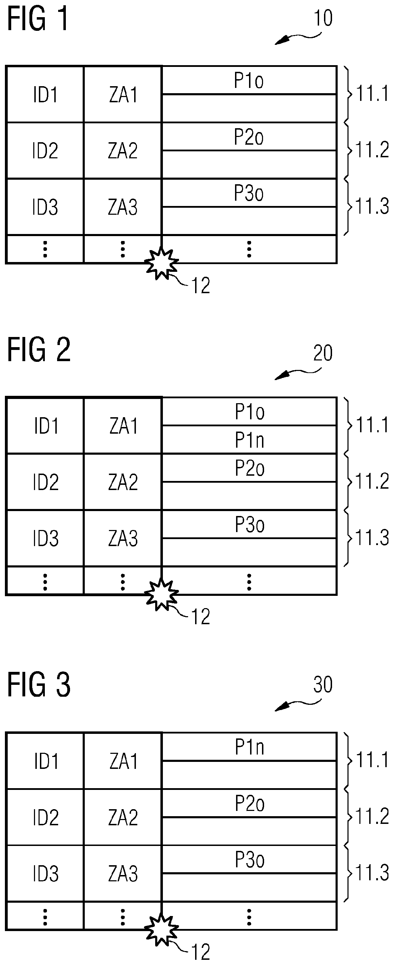

Eine erfindungsgemäße Datenstruktur für eine Positivliste 10 ist in Figur 1 dargestellt. Die Positivliste 10 umfasst einen Eintrag 11.1, 11.2, 11.3 für jeden erlaubten Kommunikationspartner des Geräts. Ein solcher Eintrag 11.1, 11.2, 11.3 wird auch als Tupel bezeichnet. Ein Eintrag 11.1, 11.2, 11.3 besteht aus einer ersten Kennung ID1, ID1, ID3, die einen ersten, einen zweiten und einen dritten Kommunikationspartner eindeutig kennzeichnen. Des Weiteren umfasst jeder Eintrag einen Wert eines vorbestimmten Zertifikatfelds ZA1, ZA2, ZA3, das ein Zertifikat als dem ersten beziehungsweise zweiten, beziehungsweise dritten Kommunikationspartner eindeutig zugeordnet kennzeichnet. Des Weiteren enthält die Positivliste 10 jeweils einen Prüfwert P1o von mindestens einem Zertifikat eines ersten Kommunikationspartners, der das Zertifikat eindeutig kennzeichnet.

Die Kennung des Kommunikationspartners ID kann beispielsweise eine IP-Adresse oder eine MAC-Adresse des Kommunikationspartners sein, die beispielsweise bei einem Verbindungsaufbau einer sicheren Verbindung über ein Transport Layer Security Protocol vom Kommunikationspartner an das Gerät übermittel wurde. Als Zertifikatfeld, das ein Zertifikat als dem Kommunikationspartner eindeutig zugeordnet kennzeichnet, kann der Zertifikatinhaber sein. In einem Zertifikat, das beispielsweise gemäß dem X.509-Standard aufgebaut ist, wird dieses Zertifikatfeld als "Subject" bezeichnet. Es kann auch eine Kennung, die in dem Zertifikatfeld "Extensions" enthalten ist, als Kennung für das Zertifikat des Kommunikationspartners verwendet werden. Die genannten Zertifikatfelder sind lediglich Beispiele und nicht eine beschränkende Auswahl.

Als Prüfwert des Zertifikats, der das Zertifikat eindeutig kennzeichnet, kann beispielsweise ein Wert verwendet werden, der sich durch Anwendung einer Einwegfunktion auf das gesamte Zertifikat ergibt. Eine solche Einwegfunktion kann beispielsweise eine Hashfunktion sein. Der entsprechend gebildete Hashwert des Zertifikats kann als Prüfwert P beziehungsweise P1o, der einen alten Prüfwert des ersten Kommunikationspartners kennzeichnet, in den Eintrag 11.1 des ersten Kommunikationspartners enthalten sein. Vorteilhafterweise ist der Teilbereich der Positivliste, der die Einträge zur ersten Kennung ID1, ID2, ID3 eines Kommunikationspartners sowie die Zertifikatfelder ZA1, ZA2, ZA3 zur eindeutigen Kennzeichnung eines Zertifikats des Kommunikationspartners enthält, durch eine digitale Signatur 12 einer vertrauenswürdigen Stelle geschützt. Das heißt, die genannten ersten beiden Felder jedes Eintrags in der Liste werden mit einem geheimen Schlüssel dieser vertrauenswürdigen Stelle verschlüsselt und können mit einem im Gerät bekannten öffentlichen Schlüssel der vertrauenswürdigen Stelle überprüft werden. Somit kann eine Veränderung, beispielsweise ein neu hinzugefügter Eintrag und somit erlaubter Kommunikationspartner oder eine Änderung eines oder mehrerer Einträge zuverlässig erkannt werden. In einer Ausführungsvariante kann die Signatur auch die Prüfwerte der Einträge erfassen bzw. darüber gebildet werden.

Solange sich ein erster Kommunikationspartner mit einem Zertifikat authentisiert, dessen Prüfwert P1o in der Liste hinterlegt ist, akzeptiert das Gerät die Kommunikation nach einer erfolgreichen Zertifikatvalidierung. Authentisiert sich ein erster Kommunikationspartner, gekennzeichnet durch eine erste Kennung ID1, nach einem Zertifikatupdate jedoch mit einem anderen Zertifikat, akzeptiert das Gerät die Kommunikation nach einer erfolgreichen Zertifikatsvalidierung genau dann, wenn das unbekannte Zertifikat des Kommunikationspartners ID1 die richtige Kennung im vorbestimmten Zertifikatfeld ZA1 aus dem signierten Teil der Liste enthält.

Zusätzlich kann als Kriterium für ein Akzeptieren des unbekannten Zertifikats geprüft werden, ob das unbekannte Zertifikat zeitlich nach dem aktuellen Zertifikat ausgestellt wurde. Dies setzt voraus, dass neben den genannten Parametern im Gerät auch weitere Parameter wie eben die Gültigkeitsdauer des aktuellen Zertifikats gespeichert sind. Erfüllt das unbekannte Zertifikat alle genannten Kriterien, so erzeugt das Gerät einen Prüfwert P1n für das bekannte Zertifikat, beispielsweise über die Einwegfunktion, und nimmt den neuen Prüfwert P1n in den Eintrag 11.1 der Positivliste 10 auf. Eine entsprechende Datenstruktur einer Positivliste 10 ist in Figur 2 dargestellt. In der Positivliste 20 aus Figur 2 sind nun beispielsweise gleichzeitig der Prüfwert P1o des alten Zertifikats sowie der Prüfwert P1n des neuen Zertifikats für einen ersten Kommunikationspartner mit der Kennung ID1 in seinem Eintrag 11.1 eingetragen. Die Einträge der weiteren erlaubten Kommunikationspartner 11.2, 11.3 bleiben bei einer solchen Aktualisierung für den ersten Kommunikationspartner unberührt.

Nach einer vorgegebenen Zeitdauer oder nach weiteren Plausibilitätsprüfungen wird optional der alte Prüfwert P1o aus dem Eintrag 11.1 entfernt und es bleibt lediglich der neue Prüfwert P1n, wie in der Positivliste 30 in Figur 3 gezeigt, als nun aktueller Prüfwert des aktuellen Zertifikats erhalten. Optional kann eine Positivliste sowohl den alten Prüfwert P1o des alten Zertifikats sowie dem neuen Prüfwert P1n des neuen Zertifikats in nach der Aktualisierung in der Positivliste belassen. Es kann beispielsweise der aktuellste Prüfwert als gültig gekennzeichnet sein.

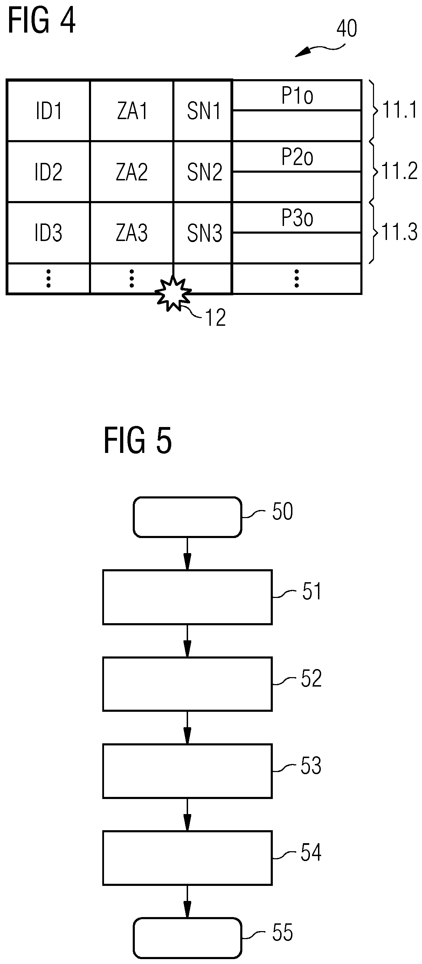

Ein Verfahren zur Aktualisierung der Positivliste 10, ist in Figur 5 schematisch dargestellt. In einem Ausgangszustand 50 sind einem Gerät alle Kommunikationspartner, die in der Positivliste 10 gespeichert sind, bekannt und es kann beispielsweise eine Kommunikationsverbindung zu all diesen Kommunikationspartnern aufgebaut werden. Im Verfahrensschritt 51 empfängt nun das Gerät ein neues Zertifikat Z1n von einem Kommunikationspartner ID1. Anschließend wird im Verfahrensschritt 53 überprüft, ob die Positivliste einen Eintrag mit einer Kennung ID1 des Kommunikationspartners und dem Wert im vorbestimmten Zertifikatfeld ZA1 übereinstimmen. Im Verfahrensschritt 54 wird der neue Prüfwert P1n, der das neue Zertifikat eindeutig kennzeichnet, in die Positivliste aufgenommen, wenn die Überprüfung der Positivliste zu einem positiven Ergebnis geführt hat. Dabei gilt als weitere Voraussetzung für die Aufnahme des neuen Prüfwerts in die Positivliste 10, dass das neue Zertifikat durch eine Zertifikatvalidierung über die Signatur des Zertifikats als gültig geprüft wurde. Ein solcher Verfahrensschritt ist im Ablaufdiagramm in Figur 5 als Verfahrensschritt 52 eingezeichnet. Die Durchführung der Zertifikatvalidierung 52 kann auch zu einem späteren Zeitpunkt, beispielsweise nach dem Überprüfen der Kennung und des Wertes des Zertifikatfelds ID1, ZA1, in Verfahrensschritt 53 durchgeführt werden.

Vor dem Aufnehmen des neuen Prüfwerts P1n in die Positivliste 10 beziehungsweise vor dem Löschen des alten Prüfwerts P1o aus der Positivliste 20 werden optional ein oder mehrere der nachfolgenden Kriterien überprüft. So wird die lokal im Gerät gespeicherte Positivliste 10 beziehungsweise Positivliste 20 nur dann aktualisiert und mit dem neuen Prüfwert P1n aktualisiert, wenn das neue Zertifikat zeitlich nach dem alten Zertifikat ausgestellt wurde. Dazu wird beispielsweise das Ausstellungsdatum des Zertifikats überprüft. Weitere Kriterien, die entweder alleine oder in Kombination miteinander erfüllt sein müssen, damit ein neues Zertifikat Zn in die Positivliste 10 aufgenommen wird, sind:
- Das neue und das alte Zertifikat sind von der gleichen Zertifikatstelle ausgestellt.
- Das neue Zertifikat enthält zusätzlich den Prüfwert des alten Zertifikats, beispielsweise in einem dem Zertifikat zugeordneten Attributzertifikat. Ein Attributzertifikat ist üblicherweise dem Zertifikat zugeordnet und dem Gerät bekannt.

Des Weiteren kann für sich oder in Kombination mit einem vorgennannten Kriterium das neue Zertifikat nur dann in die Positivliste 10 aufgenommen werden, wenn mindestens eine vorgegebene Teilmenge von Zertifikatfeldern des alten Zertifikats im neuen Zertifikat ebenfalls enthalten sind. Eine Aktualisierung des Zertifikats wird ebenfalls optional nur dann vorgenommen, wenn sich das Gerät in einem vorbestimmten Zustand befindet. Beispielsweise kann eine Aktualisierung eines Zertifikats nur in einem vorgegebenen Betriebsmodus des Geräts, beispielsweise im Wartungsmodus, durchgeführt werden.

Weiterhin ist es möglich, dass dem Gerät über eine bestehende, mit dem alten Zertifikat authentisierte Kommunikationsverbindung der aktualisierte Prüfwert des Kommunikationspartners übermittelt wird. Der Kommunikationspartner übermittelt einen neuen Prüfwert P1n über eine mit dem neuen Zertifikat Zn authentisierte Verbindung. Das neue Zertifikat Zn wird nur dann akzeptiert, wenn der neue Prüfwert P1n oder ein aus dem neuen Prüfwert abgeleiteter dritter Prüfwert mit dem aktualisierten Prüfwert übereinstimmt. Bei dem Prüfwert würde es sich dabei beispielsweise um eine Zufallszahl handeln, nicht wie im vorher beschriebenen Beispiel um eine über das Zertifikat durch eine Einwegfunktion gebildeten Hashwert. Bei einer https-Verbindung kann beispielsweise auch ein Cookie überprüft werden. Über die mit dem neuen Zertifikat Zn authentisierte Kommunikationsverbindung muss ein Cookie bereitgestellt werden, das über eine mit dem alten Zertifikat authentisierte Kommunikationsverbindung gesetzt wurde.

In einer Variante werden die vorgenannten Prüfkriterien abhängig von einem Betriebsmodus bestimmt und gesetzt, in dem sich das Gerät befindet. So kann zum Beispiel in einem offenen Betriebsmodus, wie bei der Inbetriebnahme üblicherweise vorliegend, kann ohne weitere Prüfung jedes Zertifikat "angelernt" werden, wogegen im operativen Betrieb nur nach einer Plausibilitätsprüfung, wie oben beschrieben, ein als aktualisiertes Ersatzzertifikat erkanntes neues Zertifikat akzeptiert werden.

Auch können beispielsweise nach einer erfolgreichen Aktualisierung eines neuen Zertifikats von einem ersten Kommunikationspartner in einem Gerät alle weiteren Kommunikationspartner des Geräts, die in der Positivliste aufgeführt sind, über die Zertifikatsaktualisierung des ersten Kommunikationspartners informiert werden. Dazu übermittelt das Gerät eine kryptographisch geschützte Nachricht, die beispielsweise digital signiert oder über einen kryptographisch geschützten Kommunikationskanal übertragen wird, an die erlaubten Kommunikationspartner und informiert darin über die Zertifikatsaktualisierung des beispielsweise ersten Kommunikationspartners. Darin kann beispielsweise der neue Prüfwert P1n des neuen Zertifikats des ersten Kommunikationspartners übertragen werden. Insbesondere kann eine übergeordnete Vorrichtung, wie beispielsweise eine Überwachungsvorrichtung oder eine Steuerungsvorrichtung, alle verbundenen Geräte über eine Zertifikatsaktualisierung des Geräts informieren. Diese Geräte können dann ihre lokale Positivliste aktualisieren.

In einer Variante teilt das Gerät nach einer Aktualisierung seines eigenen Zertifikats den erlaubten Kommunikationspartnern sein neues Zertifikat über eine mit seinem alten operativen Zertifikat authentisierte Kommunikationsverbindung mit. Die Kommunikationspartner können dem Gerät die Aktualisierung ihre Positivliste bestätigen. Nach erfolgter Bestätigung durch alle Kommunikationspartner könnte das Gerät der Zertifizierungsstelle eine erfolgreiche Inbetriebnahme seines neuen Zertifikats melden und so die Sperrung des alten Zertifikats veranlassen. In Zukunft würde das Gerät dann das alte Zertifikat nicht mehr verwenden.

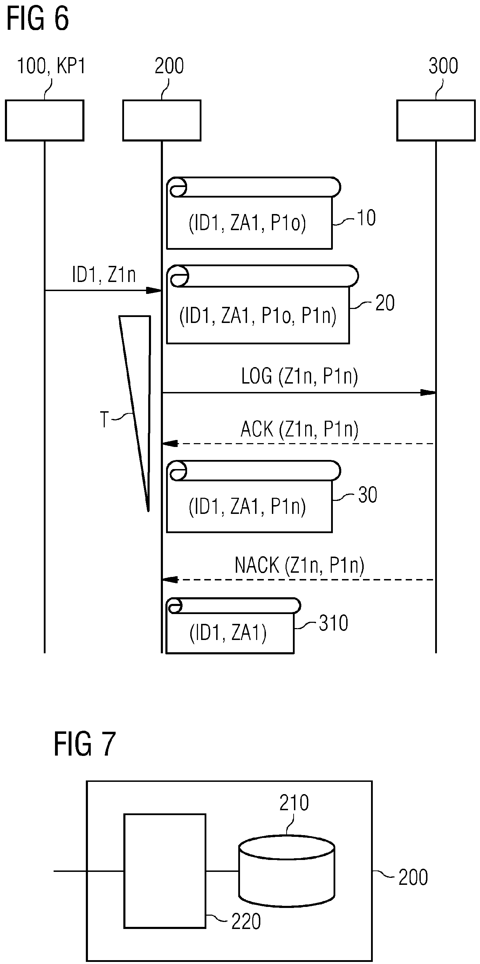

In Figur 6 ist eine weitere Variante des Verfahrens dargestellt. Darin ist ein Kommunikationspartner 100 sowie ein Gerät 200 sowie eine Überwachungsvorrichtung 300 dargestellt.

Das Gerät 200 umfasst eine Datenstruktur wie beschrieben als Positivliste 10. Sie enthält für den Kommunikationspartner einen Eintrag mit einer ersten Kennung ID1, dem Wert des Zertifikatfelds ZA1, das das verwendete Zertifikat kennzeichnet, sowie ein Prüfwert P1o eingetragen. Sendet nun der Kommunikationspartner 100 ein neues Zertifikat Z1n über eine Verbindung, aus der auch eine erste Kennung ID1 des Kommunikationspartner bereitgestellt wird, so wird im Gerät 200 die erste Kennung ID1 sowie der Wert des Zertifikatfelds ZA1 des neuen Zertifikat Z1n mit der Positivliste 10 verglichen und bei einem positiven Prüfergebnis und einer erfolgreichen Zertifikatvalidierung ein neuer Prüfwert P1n eingetragen.

Mit dem Eintrag wird beispielsweise ein Timer T, der in Figur 6 durch den Keil links neben dem Gerät 200 dargestellt ist, gestartet. Ab diesem Zeitpunkt sind sowohl der alte P1o als auch der neue Prüfwert P1n in der Positivliste 20 gespeichert. Das Gerät 200 meldet nun die Aktualisierung der Positivliste bzw. das neue Zertifikat oder auch den neuen Prüfwert P1n an die Überwachungsvorrichtung 300. Alternativ kann auch der alte Prüfwert P1o zu diesem Zeitpunkt bereits gelöscht werden. Optional kann die gesamte aktualisierte Positivliste des Geräts an die Überwachungsvorrichtung 300 übermittelt werden. Im Zuge einer Überprüfung der Meldungen kann der Eintrag des Kommunikationspartners beziehungsweise das neue Zertifikat gegen die von der, vertrauenswürdigen Zertifizierungsstelle ausgestellten gültigen Zertifikate geprüft werden.

Wenn dabei ein Eintrag als ungültig beziehungsweise ein gemeldetes Zertifikat als ungültig erkannt wird, können entsprechende Aktion sowohl in der ausstellenden Zertifizierungsstelle als auch im Gerät selbst eingeleitet werden. Solche Aktionen im Gerät können beispielsweise durch eine Rückmeldung NACK von der Überwachungsvorrichtung 300 an das Gerät 200 ausgelöst werden. Im Gerät 200 würden daraufhin beispielsweise der Prüfwert P1n als ungültig gekennzeichnet oder gelöscht werden, siehe Positivliste 31. Zusätzlich können weitere Maßnahmen veranlasst werden.

Optional können auch positive Prüfergebnisse, beispielsweise durch eine Meldung ACK von der Überwachungsvorrichtung 300 an das Gerät 200 übermittelt werden. Nach Erhalt einer solchen Nachricht würde das Gerät 200 beispielsweise den alten Prüfwert P1o als ungültig kennzeichnen oder diesen streichen und den neuen Prüfwert P1n als aktuellen Prüfwert einsetzen, siehe Positivliste 30. Wird keine positive Rückmeldung ACK übertragen, so kann nach Ablauf des Timers T der neue Prüfwert P1n als aktueller Prüfwert in die Positivliste übernommen werden beziehungsweise das neue Zertifikat als aktuelles Zertifikat bestätigt werden und optional ebenfalls der alte Prüfwert P1o als ungültig gekennzeichnet werden.

In die Positivliste 40 kann auch eine Seriennummer aus einem Gerätezertifikat eines Kommunikationspartners, wie in Figur 4 dargestellt, aufgenommen werden. In diesem Falle würde für einen ersten erlaubten Kommunikationspartner mit der Kennung ID1 und mit dem Zertifikatfeld ZA1 die Seriennummer SN1 des Gerätezertifikats des Kommunikationspartners im Eintrag 11.1 der Positivliste 40 hinzugefügt. In diesem Falle werden bevorzugt alle Einträge durch eine digitale Signatur 12 geschützt werden. Wenn sich das Zertifikat des ersten Kommunikationspartners ändert, kann der erste Kommunikationspartner sich zusätzlich mit seinem Gerätezertifikat authentisieren. Bei der Auswertung von sogenannten Logeinträgen könnte diese Änderung gegen ein System zur Verwaltung von Wartungsaufträgen abgeglichen werden, falls sich die neue und die alte Seriennummer unterscheiden. So kann durch einen Wartungsbericht geprüft werden, ob zum Beispiel ein Gerät ausgetauscht wurde.

In Figur 7 ist nun ein erfindungsgemäßes Gerät 200 dargestellt. Das Gerät 200 umfasst eine Aktualisierungseinheit 220, die derart ausgebildet ist, eine Positivliste bereitzustellen und zu aktualisieren. Gerät 200 umfasst ebenfalls eine Speichereinheit 210, in der die Positivliste und beispielsweise die Zertifikate selbst gespeichert sind. Das Gerät 200 umfasst Prozessoren, auf ein Computerprogrammprodukt, das Programmcodeteile enthält, die geeignet sind, das beschriebene Verfahren durchzuführen, gespeichert.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Datenstruktur zur Verwendung als Positivliste in einem Gerät, umfassend einen Eintrag für jeden erlaubten Kommunikationspartner des Geräts mit
- einer ersten Kennung (ID1), die den Kommunikationspartner (KP1) eindeutig kennzeichnet,
- einem Wert eines vorbestimmten Zertifikatfeldes (ZA1), das ein Zertifikat als dem Kommunikationspartner eindeutig zugeordnet kennzeichnet, und
- jeweils ein Prüfwert (P1) von mindestens einem Zertifikat (Z1) eines Kommunikationspartners (KP1), der das Zertifikat (Z1) eindeutig kennzeichnet,
- wobei die Datenstruktur zumindest zeitweise einen Prüfwert (P1o) eines alten Zertifikats und einen Prüfwert (P1n) eines neuen Zertifikats (Z1n) enthält und wobei die Datenstruktur derart ausgebildet ist, dass der Prüfwert (P1o) des alten Zertifikats nach einer vorgegebenen Zeitdauer entfernt wird,
und vor einer Aufnahme des Prüfwerts (P1n) des neuen Zertifikats (Z1n) in die Positivliste überprüft wird, ob das neue Zertifikat zusätzlich den Prüfwert (P1o) des alten Zertifikats enthält.

2. Datenstruktur nach Anspruch 1, wobei der Prüfwert (P1) eines Zertifikats (Z1) ein mit einer Einwegfunktion über das Zertifikat generierter Wert ist.

3. Datenstruktur nach einem der vorangehenden Ansprüche, wobei die erste Kennung (ID1, ID2, ID3) und der Wert des Zertifikatfeldes (ZA1, ZA2, ZA3) aller Einträge (11.1, 11.2, 11.3) digital signiert sind.

4. Datenstruktur nach einem der vorangehenden Ansprüche, wobei das vorbestimmte Zertifikatfeld (ZA) der Zertifikatinhaber ist.

5. Datenstruktur nach einem der vorangehenden Ansprüche, wobei in einem Eintrag eines erlaubten Kommunikationspartners (KP1) zusätzlich die Seriennummer (SN1) eines Gerätezertifikats des Kommunikationspartners (KP1) enthalten ist.

6. Verfahren zur Aktualisierung einer Datenstruktur zur Verwendung als Positivliste (10, 20, 30) gemäß den Ansprüchen 1 bis 5 für Zertifikate von erlaubten Kommunikationspartnern eines Geräts, umfassend
- Empfangen (51) eines neuen Zertifikats (Z1n) von einem Kommunikationspartner (KP1) im Gerät,
- Überprüfen (53), ob die Positivliste (10) einen Eintrag mit einer Kennung (ID1) des Kommunikationspartners (KP1) und einem Wert eines vorbestimmten Zertifikatfeld (ZA1) aus dem neuen Zertifikat (Z1n), aufweist,
- Überprüfen, ob das neue Zertifikat (Z1n) zusätzlich einen Prüfwert (P1o) eines alten Zertifikats enthält, und
- Aufnehmen (54) eines neuen Prüfwerts (P1n), der das neue Zertifikat (Z1n) eindeutig kennzeichnet, in die Positivliste (10), wenn die Überprüfung der Positivliste (10) und des neuen Zertifikats (Z1n) ein positives Ergebnis ergeben hat,
wobei die Datenstruktur zumindest zeitweise den Prüfwert (P1o) des alten Zertifikats (Z1n) und den Prüfwert (P1n) des neuen Zertifikats enthält, und
- Entfernen des Prüfwerts des alten Zertifikats nach einer vorgeschriebenen Zeitdauer.

7. Verfahren nach Anspruch 6, wobei der Prüfwert (P1) aus dem empfangenen Zertifikat (Z1) von dem Gerät ermittelt wird.

8. Verfahren nach einem der vorangehenden Ansprüche 6 oder 7, wobei das neue Zertifikat (Z1n) nur dann in die Positivliste (10) aufgenommen wird, wenn das neue Zertifikat (Z1n) zeitlich nach dem alten Zertifikat (Z1o) ausgestellt wurde.

9. Verfahren nach einem der vorangehenden Ansprüche 6 bis 8, wobei das neue Zertifikat (Z1n) nur dann in die Positivliste (10) aufgenommen wird, wenn
zusätzlich das neue Zertifikat (Z1n) und das alte Zertifikat (Z1o) von der gleichen Zertifizierungsstelle ausgestellt wurden.

10. Verfahren nach einem der vorangehenden Ansprüche 6 bis 9, wobei das neue Zertifikat (Z1n) nur dann in die Positivliste (10) aufgenommen wird, wenn das neue Zertifikat (Z1n) zusätzlich den Prüfwert (P1o) des alten Zertifikats (Z1o), insbesondere in einem Attributzertifikat, enthält.

11. Verfahren nach einem der vorangehenden Ansprüche 6 bis 10, wobei das neue Zertifikat (Z1n) nur dann in die Positivliste (10) aufgenommen wird, wenn sich das Gerät in einem vorbestimmten Zustand befindet.

12. Verfahren nach einem der vorangehenden Ansprüche 6 bis 11, wobei das neue Zertifikat (Z1n) nur dann in die Positivliste (10) aufgenommen wird, wenn mindestens eine vorgegebene Teilmenge von Feldern des alten Zertifikats (Z1o) im neuen Zertifikat (Z1n) enthalten ist.

13. Verfahren nach einem der vorangehenden Ansprüche 6 bis 12, wobei ein aktualisierte Prüfwert (Po) dem Gerät über eine mit dem alten Zertifikat (Z1o) authentisierte Verbindung übermittelt wird und der neue Prüfwert (P1n) über eine mit dem neuen Zertifikat (Z1n) authentifizierte Verbindung übermittelt wird und das neue Zertifikat (Z1n) nur dann in die Positivliste (10) aufgenommen wird, wenn der neue Prüfwert (P1n) oder ein aus dem neuen Prüfwert (P1n) abgeleiteter dritter Prüfwert mit dem aktualisierten Prüfwert (P1o) übereinstimmt.

14. Verfahren nach einem der vorangehenden Ansprüche 6 bis 13, wobei das Gerät (200) das neue Zertifikat (Z1n) des Kommunikationspartners (KP1, 100) an eine Überwachungsvorrichtung (300) meldet und das Gerät (200) bei Erhalt eines negativen Überprüfungsergebnisses von der Überwachungsvorrichtung (300) Maßnahmen einleitet.

15. Verfahren nach einem der vorangehenden Ansprüche 6 bis 14, wobei das neue und das alte Zertifikat (Z1o, Z1n) als gültig in die Positivliste (10) eingetragen werden und nach Ablauf einer vorbestimmbaren Zeitdauer oder nach Erhalt eines positiven Überprüfungsergebnisses (ACK) oder Ablauf der Gültigkeitsdauer des alten Zertifikats das alte Zertifikat (Z1o) ungültig wird.

16. Verfahren nach einem der vorangehenden Ansprüche 6 bis 15, wobei das Gerät (200) allen Kommunikationspartnern (KP1, 100), die in der Positivliste (10) genannt sind, durch eine, insbesondere kryptographisch geschützte, Nachricht die Zertifikat-Änderung des Kommunikationspartners (KP1, 100) mitteilt.

17. Verfahren nach einem der vorangehenden Ansprüche 6 bis 16, wobei der Kommunikationspartner (KP1, 100) bei einer Änderung seines Zertifikats zusätzlich sein Gerätezertifikat zur Authentisierung an das Gerät (200) übermittelt.

18. Gerät umfassend eine Aktualisierungseinheit (220), wobei die Aktualisierungseinheit (220) derart ausgebildet ist eine Datenstruktur zur Verwendung als Positivliste (10) gemäß den Ansprüchen 1 bis 5 bereitzustellen und gemäß den Ansprüchen 6 bis 17 zu aktualisieren.

19. Gerät nach Anspruch 18, wobei das Gerät (200) eine Aktualisierung des eigenen Zertifikats allen Kommunikationspartnern (KP1, KP2, KP3) die in der Positivliste (10) enthalten sind mitteilt.

20. Computerprogrammprodukt, das direkt in einen Speicher eines digitalen Computers ladbar ist, umfassend Programmcodeteile, die dazu geeignet sind, die Schritte des Verfahrens nach einem der Ansprüche 6 bis 17 durchzuführen.

## Claims

1. Data structure for use as a positive list in a device, comprising an entry for each permitted communication partner of the device having
- a first identifier (ID1) that explicitly identifies the communication partner (KP1),
- a value of a predetermined certificate field (ZA1) that identifies a certificate as explicitly associated with the communication partner, and
- a respective check value (P1) from at least one certificate (Z1) of a communication partner (KP1) that explicitly identifies the certificate (Z1),
- wherein the data structure at least intermittently contains a check value (P1o) of an old certificate and a check value (P1n) of a new certificate (Z1n) and wherein the data structure is in a form such that the check value (P1o) of the old certificate is removed after a prescribed period, and inclusion of the check value (P1n) of the new certificate (Z1n) in the positive list is preceded by a check being performed to ascertain whether the new certificate additionally contains the check value (P1o) of the old certificate.

2. Data structure according to Claim 1, wherein the check value (P1) of a certificate (Z1) is a value generated using a one-way function for the certificate.

3. Data structure according to either of the preceding claims, wherein the first identifier (ID1, ID2, ID3) and the value of the certificate field (ZA1, ZA2, ZA3) of all entries (11.1, 11.2, 11.3) are digitally signed.

4. Data structure according to one of the preceding claims, wherein the predetermined certificate field (ZA) is the certificate holder.

5. Data structure according to one of the preceding claims, wherein an entry for a permitted communication partner (KP1) additionally contains the serial number (SN1) of a device certificate of the communication partner (KP1).

6. Method for updating a data structure for use as a positive list (10, 20, 30) according to Claims 1 to 5 for certificates from permitted communication partners of a device, comprising
- receiving (51) a new certificate (Z1n) from a communication partner (KP1) in the device,
- checking (53) whether the positive list (10) has an entry having an identifier (ID1) of the communication partner (KP1) and a value of a predetermined certificate field (ZA1) from the new certificate (Z1n),
- checking whether the new certificate (Z1n) additionally contains a check value (P1o) of an old certificate, and
- including (54) a new check value (P1n), which explicitly identifies the new certificate (Z1n), in the positive list (10) if the check on the positive list (10) and the new certificate (Z1n) has yielded a positive result,
wherein the data structure at least intermittently contains the check value (P1o) of the old certificate (Z1n) and the check value (P1n) of the new certificate, and
- removing the check value of the old certificate after a specified period.

7. Method according to Claim 6, wherein the check value (P1) is ascertained from the received certificate (Z1) by the device.

8. Method according to either of the preceding Claims 6 and 7, wherein the new certificate (Z1n) is included in the positive list (10) only if the new certificate (Z1n) has been issued at a time after the old certificate (Z1o).

9. Method according to one of the preceding Claims 6 to 8, wherein the new certificate (Z1n) is included in the positive list (10) only if
the new certificate (Z1n) and the old certificate (Z1o) have additionally been issued by the same certification center.

10. Method according to one of the preceding Claims 6 to 9, wherein the new certificate (Z1n) is included in the positive list (10) only if the new certificate (Z1n) additionally contains the check value (P1o) of the old certificate (Z1o), particularly in an attribute certificate.

11. Method according to one of the preceding Claims 6 to 10, wherein the new certificate (Z1n) is included in the positive list (10) only if the device is in a predetermined state.

12. Method according to one of the preceding Claims 6 to 11, wherein the new certificate (Z1n) is included in the positive list (10) only if at least one prescribed subset of fields of the old certificate (Z1o) is contained in the new certificate (Z1n).

13. Method according to one of the preceding Claims 6 to 12, wherein an updated check value (Po) is transmitted to the device via a connection authenticated using the old certificate (Z1o), and the new check value (P1n) is transmitted via a connection authenticated using the new certificate (Z1n), and the new certificate (Z1n) is included in the positive list (10) only if the new check value (P1n) or a third check value derived from the new check value (P1n) matches the updated check value (P1o).

14. Method according to one of the preceding Claims 6 to 13, wherein the device (200) reports the new certificate (Z1n) of the communication partner (KP1, 100) to a monitoring apparatus (300), and the device (200) initiates measures on receiving a negative check result from the monitoring apparatus (300).

15. Method according to one of the preceding Claims 6 to 14, wherein the new and old certificates (Z1o, Z1n) are entered into the positive list (10) as valid and the old certificate (Z1o) becomes invalid after a predeterminable period of time has passed or after a positive check result (ACK) is received or the validity period of the old certificate has expired.

16. Method according to one of the preceding Claims 6 to 15, wherein the device (200) uses an, in particular cryptographically protected, message to notify all communication partners (KP1, 100) cited in the positive list (10) of the change of certificate of the communication partner (KP1, 100).

17. Method according to one of the preceding Claims 6 to 16, wherein the communication partner (KP1, 100), on a change of its certificate, additionally transmits its device certificate to the device (200) for the purpose of authentication.

18. Device comprising an update unit (220), wherein the update unit (220) is in such a form as to provide a data structure for use as a positive list (10) according to Claims 1 to 5 and to update it according to Claims 6 to 17.

19. Device according to Claim 18, wherein the device (200) notifies all communication partners (KP1, KP2, KP3) contained in the positive list (10) of an update of its own certificate.

20. Computer program product loadable directly into a memory of a digital computer, comprising program code parts that are suitable for performing the steps of the method according to one of Claims 6 to 17.

## Revendications

1. Structure de données destinée à être utilisée comme liste positive dans un appareil, comprenant une entrée pour chaque partenaire de communication autorisé de l'appareil avec
- un premier identificateur (ID1) qui identifie sans équivoque le partenaire de communication (KP1),
- une valeur d'un champ de certificat (ZA1) prédéterminé, qui identifie un certificat comme étant attribué sans équivoque au partenaire de communication, et
- respectivement une valeur de contrôle (P1) d'au moins un certificat (Z1) d'un partenaire de communication (KP1) qui identifie sans équivoque le certificat (Z1),
- dans laquelle la structure de données contient au moins temporairement une valeur de contrôle (P1o) d'un ancien certificat et une valeur de contrôle (P1n) d'un nouveau certificat (Z1n) et dans laquelle la structure de données est ainsi conçue que la valeur de contrôle (P1o) de l'ancien certificat est enlevée après une durée prédéfinie,
et avant un enregistrement de la valeur de contrôle (P1n) du nouveau certificat (Z1n) dans la liste positive, il est vérifié si le nouveau certificat contient en outre la valeur de contrôle (P1o) de l'ancien certificat.

2. Structure de données selon la revendication 1, dans laquelle la valeur de contrôle (P1) d'un certificat (Z1) est une valeur générée par le certificat avec une fonction à sens unique.

3. Structure de données selon l'une des revendications précédentes, dans laquelle le premier identificateur (ID1, ID2, ID3) et la valeur du champ de certificat (ZA1, ZA2, ZA3) de toutes les entrées (11.1, 11.2, 11.3) ont une signature numérique.

4. Structure de données selon l'une des revendications précédentes, dans laquelle le champ de certificat (ZA) prédéterminé est le détenteur du certificat.

5. Structure de données selon l'une des revendications précédentes, dans laquelle le numéro de série (SN1) d'un certificat d'appareil du partenaire de communication (KP1) est en outre contenu dans une entrée d'un partenaire de communication (KP1) autorisé.

6. Procédé destiné à actualiser une structure de données destinée à être utilisée comme liste positive (10, 20, 30) selon les revendications 1 à 5 pour des certificats de partenaires de communication autorisés d'un appareil, comprenant
- la réception (51) d'un nouveau certificat (Z1n) d'un partenaire de communication (KP1) dans l'appareil,
- la vérification (53) si la liste positive (10) présente une entrée avec un identificateur (ID1) du partenaire de communication (KP1) et une valeur d'un champ de certificat (ZA1) prédéterminé à partir du nouveau certificat (Z1n),
- la vérification si le nouveau certificat (Z1n) contient en outre une valeur de contrôle (P1o) d'un ancien certificat, et
- l'enregistrement (54) d'une nouvelle valeur de contrôle (P1n) qui identifie sans équivoque le nouveau certificat (Z1n), dans la liste positive (10), lorsque la vérification de la liste positive (10) et du nouveau certificat (Z1n) a fourni un résultat positif, dans lequel la structure de données contient au moins temporairement la valeur de contrôle (P1o) de l'ancien certificat (Z1n) et la valeur de contrôle (P1n) du nouveau certificat, et
- l'enlèvement de la valeur de contrôle de l'ancien certificat après une durée prédéfinie.

7. Procédé selon la revendication 6, dans lequel la valeur de contrôle (P1) est déterminée par l'appareil à partir du certificat (Z1) reçu.

8. Procédé selon l'une des revendications précédentes 6 ou 7, dans lequel le nouveau certificat (Z1n) n'est enregistré dans la liste positive (10) que lorsque le nouveau certificat (Z1n) a été établi chronologiquement après l'ancien certificat (Z1o) .

9. Procédé selon l'une des revendications précédentes 6 à 8, dans lequel le nouveau certificat (Z1n) n'est enregistré dans la liste positive (10) que lorsqu'en outre le nouveau certificat (Z1n) et l'ancien certificat (Z1o) ont été établis par le même point de certification.

10. Procédé selon l'une des revendications précédentes 6 à 9, dans lequel le nouveau certificat (Z1n) n'est enregistré dans la liste positive (10) que lorsqu'en outre le nouveau certificat (Z1n) contient la valeur de contrôle (P1o) de l'ancien certificat (Z1o), en particulier dans un certificat d'attribut.

11. Procédé selon l'une des revendications précédentes 6 à 10, dans lequel le nouveau certificat (Z1n) n'est enregistré dans la liste positive (10) que lorsque l'appareil se trouve dans un état prédéterminé.

12. Procédé selon l'une des revendications précédentes 6 à 11, dans lequel le nouveau certificat (Z1n) n'est enregistré dans la liste positive (10) que lorsqu'au moins une quantité partielle prédéfinie de champs de l'ancien certificat (Z1o) est contenue dans le nouveau certificat (Z1n).

13. Procédé selon l'une des revendications précédentes 6 à 12, dans lequel une valeur de contrôle (Po) actualisée est transmise à l'appareil par une liaison authentifiée avec l'ancien certificat (Z1o) et la nouvelle valeur de contrôle (P1n) est transmise par une liaison authentifiée avec le nouveau certificat (Z1n), et le nouveau certificat (Z1n) n'est enregistré dans la liste positive (10) que lorsque la nouvelle valeur de contrôle (P1n) ou une troisième valeur de contrôle dérivée de la nouvelle valeur de contrôle (P1n) concorde avec la valeur de contrôle actualisée (P1o).

14. Procédé selon l'une des revendications précédentes 6 à 13, dans lequel l'appareil (200) signale le nouveau certificat (Z1n) du partenaire de communication (KP1, 100) à un dispositif de surveillance (300) et l'appareil (200) introduit des mesures à l'obtention d'un résultat de surveillance négatif du dispositif de surveillance (300).

15. Procédé selon l'une des revendications précédentes 6 à 14, dans lequel le nouveau et l'ancien certificats (Z1o, Z1n) sont entrés comme valides dans la liste positive (10) et après écoulement d'une durée pouvant être prédéterminée ou après obtention d'un résultat de surveillance positif (ACK) ou écoulement de la durée de validité de l'ancien certificat, l'ancien certificat (Z1o) devient invalide.

16. Procédé selon l'une des revendications précédentes 6 à 15, dans lequel l'appareil (200) partage à tous les partenaires de communication (KP1, 100) qui sont nommés dans la liste positive (10), la modification de certificat du partenaire de communication (KP1, 100), par un message en particulier sécurisé de manière cryptographique.

17. Procédé selon l'une des revendications précédentes 6 à 16, dans lequel le partenaire de communication (KP1, 100), lors d'une modification de son certificat, transmet en outre à l'appareil (200) son certificat d'appareil pour authentification.

18. Appareil comprenant une unité d'actualisation (220), dans lequel l'unité d'actualisation (220) est ainsi conçue pour fournir selon les revendications 1 à 5 et actualiser selon les revendications 6 à 17, une structure de données destinée à être utilisée comme liste positive (10).

19. Appareil selon la revendication 18, dans lequel l'appareil (200) communique une actualisation de son propre certificat à tous les partenaires de communication (KP1, KP2, KP3) qui sont contenus dans la liste positive (10).

20. Produit de programme informatique qui peut être chargé directement dans une mémoire d'un ordinateur numérique, comprenant des parties de code de programme qui sont appropriées pour exécuter les étapes du procédé selon l'une des revendications 6 à 17.
